(19) **Europäisches Patentamt** / **European Patent Office** / **Office européen des brevets**

(11) **EP 3 993 332 A1**

(12) **EUROPEAN PATENT APPLICATION**
published in accordance with Art. 153(4) EPC

(43) Date of publication:
**04.05.2022 Bulletin 2022/18**

(21) Application number: **19902898.6**

(22) Date of filing: **05.11.2019**

(51) International Patent Classification (IPC):
**H04L 25/03** $^{(2006.01)}$

(52) Cooperative Patent Classification (CPC):
**H04L 25/0222; H04L 27/26; H04L 27/2691; H04L 27/2695;** H04L 25/022; H04L 25/0224

(86) International application number:
**PCT/CN2019/115779**

(87) International publication number:
**WO 2020/134611 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2018 CN 201811643708**

(71) Applicant: **ZTE Corporation**
**Shenzhen, Guangdong 518057 (CN)**

(72) Inventors:
• **ZHANG, Haoyuan**
**Shenzhen, Guangdong 518057 (CN)**

• **HUANG, Jun**
**Shenzhen, Guangdong 518057 (CN)**
• **LIU, Yuan**
**Shenzhen, Guangdong 518057 (CN)**
• **AI, Xingxing**
**Shenzhen, Guangdong 518057 (CN)**

(74) Representative: **Perronace, Andrea et al**
**Jacobacci & Partners S.p.A.**
**Via Tomacelli, 146**
**00186 Roma (IT)**

(54) **METHOD AND APPARATUS FOR DETERMINING DOPPLER SHIFT**

(57) A method and apparatus to determine a Doppler shift are provided. The method includes: determining Resource Block-level (RB-level) interference suppression matrices according to RB-level channel estimations corresponding to a received signal and RB-level noise covariance matrices, obtained by pre-processing, corresponding to the received signal; obtaining equivalent channel estimations by using the RB-level interference suppression matrices merged in a spatial domain; and calculating port-level and user equipment-level (UE-level) Doppler shift estimations according to the equivalent channel estimations. With the method and the apparatus, the poor Doppler shift estimation accuracy problem of a target cell due to the interference from neighboring cells can be solved. In addition, the intra-frequency interference from neighbouring cells can be effectively compressed, and a higher Doppler shift estimation accuracy can be achieved by a lower computation overhead.

Fig. 1

Determine RB-level interference suppression matrices according to RB-level channel estimations corresponding to a received signal and RB-level noise covariance matrices, obtained by preprocessing, corresponding to the received signal — S102

Obtain equivalent channel estimations by using the RB-level interference suppression matrices merged in a spatial domain — S104

Calculate port-level and UE-level Doppler shift estimations according to the equivalent channel estimations — S106

**EP 3 993 332 A1**

**Description**

**Technical Field**

The present application relates to the field of communications, and in particular to a method and apparatus to determine the Doppler shift.

**Background**

When a mobile station moves towards a certain direction at a constant velocity, there causes a frequency offset (Doppler shift) between the transmitting end and the receiving end. In an Orthogonal Frequency Division Multiplexing (OFDM) system, accurate Doppler shift estimation is of great significance. For example, the estimated Doppler shift can be applied in: 1) a channel estimation algorithm to compensate the frequency offset within the time-domain Code Division Multiplexing (CDM) group in Channel State Indication Reference Signal (CSI-RS) or Demodulation Reference Signal (DMRS); 2) a channel interpolation procedure where frequency offset compensation is applied among data OFDM symbols based on DMRS estimation; and 3) a pilot resource allocation procedure, where configurations such as the number of DMRS symbols within a slot and the period of Sounding Reference Signal (SRS) can be determined.

There are two main Doppler shift estimation methods in the related works: 1) cyclic prefix (CP) based estimation and 2) phase offset based estimation. The CP based estimation has the advantage that only one OFDM symbol is required, but due to the influence of multi-path time delay spread, the tail generated by the multi-path time delay of the previous OFDM symbol may contaminate the head of the following OFDM symbol, and results in the Doppler shift estimation inaccuracy. The phase offset based estimation calculates the phase offset of wireless channels between two or more OFDM symbols within a slot. The accuracy of the Doppler shift estimation is determined by the accuracy of the wireless channel estimation used. In a cellular system, since pilots of different cells cannot be completely ensured to have orthogonality, interference from neighboring cells is inevitable. When the interference signal powers from neighboring cells are high, especially when the spatial correlation between the interference signals and the target reference signal is high, the accuracy of the Doppler shift estimation in the target cell is seriously affected.

**Summary**

Embodiments of the present application provide a method and apparatus to determine a Doppler shift, which may solve the problem in the related works of poor Doppler shift estimation accuracy in the target cell due to the interference from neighboring cells.

According to an embodiment of the present application, a method to determine a Doppler shift is provided, which includes the following operations. Resource Block (RB) level interference suppression matrices are determined according to RB-level channel estimations corresponding to a received signal and RB-level noise covariance matrices, obtained by pre-processing, corresponding to the received signal. Equivalent channel estimations are obtained by using the RB-level interference suppression matrices merged in the spatial domain. Port-level and user equipment (UE)-level Doppler shift estimations are calculated according to the equivalent channel estimations.

In at least one exemplary embodiment, the RB-level channel estimations $\mathbf{H}_{O_i,rb}$ can be determined by the following equation:

$$\mathbf{H}_{O_i,rb} = \left. \sum_{k=0}^{N_{rsPerRB}-1} \mathbf{H}_{O_i,k} \middle/ N_{rsPerRB} \right. \in \square^{N_{ante} \times N_{port}},$$

where $\mathbf{H}_{O_i,k}$ represents the subcarrier-level channel estimation, $i$ represents an index of OFDM symbol $O_i$, $N_{rsPerRB}$ represents the number of channel estimations within RB granularity, $N_{ante}$ represents the number of receiving antennas, $N_{port}$ represents the number of ports, and $\square$ represents a complex domain.

In at least one exemplary embodiment, the RB-level noise covariance matrices $\mathbf{Rnn}$ can be determined by the following equation:

$$\mathbf{Rnn}_{O_i,RB} = \left. \mathbf{ni}_{O_i,rb} \cdot \left(\mathbf{ni}_{O_i,rb}\right)^{H} \middle/ N_{rsPerRB} \right. \in \square^{N_{ante} \times N_{ante}},$$

where $N_{rsPerRB}$ represents the number of channel estimations within RB granularity, and $\mathbf{ni}_{O_i,rb} \in \square^{N_{ante} \times N_{rsPerRB}}$

represents a subcarrier-level noise estimation.

In at least one exemplary embodiment, the RB-level noise covariance matrices may be subjected to the following pre-processing: summing and averaging the RB-level noise covariance matrices of multiple OFDM symbols; and performing diagonal loading and inverse calculation on the RB-level noise covariance matrix obtained from summing and averaging multiple noise covariance matrices.

In at least one exemplary embodiment, the RB-level noise covariance matrix $\mathbf{Rnn}_{RB}$ obtained from summing and averaging the multiple noise covariance matrices may be determined by the following equation:

$$\mathbf{Rnn}_{RB} = \sum_{i=0}^{N_{RS}-1} \mathbf{Rnn}_{O_i,RB} \Big/ N_{RS} \in \Box^{N_{ante} \times N_{ante}},$$

where $N_{RS}$ represents the number of OFDM symbols.

In at least one exemplary embodiment, the operation of performing the diagonal loading and the inverse calculation on the RB-level noise covariance matrix obtained from summing and averaging the multiple noise covariance matrices may be implemented by the following equation:

$$\mathbf{iRnn}_{RB} = \left( \mathbf{Rnn}_{RB} + \alpha \cdot \left( \sum_{i=1}^{N_{ante}} \mathbf{Rnn}_{RB}(i,i) \right) \Big/ N_{ante} \cdot \mathbf{I}_{N_{ante} \times N_{ante}} \right)^{-1} \in \Box^{N_{ante} \times N_{ante}},$$

where $\mathbf{iRnn}_{RB}$ represents an output result of the diagonal loading and the inverse calculation on $Rnn_{RB}$, $\alpha \in \Box^{1 \times 1}$ represents a diagonal loading factor, and $Rnn_{RB}$ *(i,i)* represents a diagonal element with index *(i,i)*.

In at least one exemplary embodiment, the RB-level interference suppression matrices may be determined at least by the following equation:

$$\mathbf{G}_{rb} = \left( \mathbf{H}_{O_i,rb}^H \cdot \mathbf{iRnn}_{RB} \cdot \mathbf{H}_{O_i,rb} + \mathbf{I}_{N_{port} \times N_{port}} \right)^{-1} \mathbf{H}_{O_i,rb}^H \cdot \mathbf{iRnn}_{RB} \in \Box^{N_{port} \times N_{ante}},$$

or,

$$\mathbf{G}_{rb} = \mathbf{H}_{O_i,rb}^H \left( \mathbf{H}_{O_i,rb} \mathbf{H}_{O_i,rb}^H + \mathbf{Rnn}_{RB} \right)^{-1} \in \Box^{N_{port} \times N_{ante}}$$

where $\mathbf{iRnn}_{RB}$ represents an output result of the diagonal loading and the inverse calculation on $\mathbf{Rnn}_{RB}$, and $\mathbf{H}_{O_i,rb}^H$ represents a channel estimation of an *i*-th OFDM symbol $O_i$ used within a preset time period when calculating $\mathbf{G}_{rb}$.

In at least one exemplary embodiment, the operation of obtaining the equivalent channel estimations by using the RB-level interference suppression matrices merged in the spatial domain may include that: interference suppression is performed on all OFDM symbols within the preset time period in the spatial domain by using a weight value.

In at least one exemplary embodiment, the equivalent channel may be calculated by the following equation:

$$\overline{\mathbf{H}_{O_i,rb}} = \mathbf{G}_{rb} \mathbf{H}_{O_i,rb} \in \Box^{N_{port} \times N_{port}},$$

where $\mathbf{G}_{rb}$ represents the weight value.

In at least one exemplary embodiment, the operation of calculating the port-level and UE-level Doppler shift estimations according to the equivalent channel estimations may include that: multiple Doppler shift estimations of a designated port are determined according to the equivalent channel estimations; frequency domain average is performed on the multiple Doppler shift estimations of the designated port to obtain the final port-level Doppler shift; and port-level average is performed on multiple port-level Doppler shift estimations to obtain UE-level Doppler shift estimations.

In at least one exemplary embodiment, the Doppler shift estimations of the designated port may be calculated by the following equation:

$$fd_{rb}(p) = \frac{angle\left(\left(\overline{\mathbf{H}_{O_0,rb}}(p,p)\right)^H \cdot \overline{\mathbf{H}_{O_i,rb}}(p,p)\right)}{2\pi \cdot \Delta_i} \in \square^{1\times 1},$$

where *angle* (.) represents the radian calculation, $\overline{\mathbf{H}_{O_i,rb}}$**(p,p)** $\in \square 1\times 1$ represents a diagonal element with index *(p,p), p* = {1,...,$N_{port}$}, and $\Delta_i$ represents the time interval between OFDM symbols $O_i$ and $O_0$ with pilots.

According to another embodiment of the present application, an apparatus to determine a Doppler shift is provided, which may include: a determination module, configured to determine RB-level interference suppression matrices according to RB-level channel estimations corresponding to a received signal and RB-level noise covariance matrices, obtained by pre-processing, corresponding to the received signal; a merging module, configured to obtain equivalent channel estimations by using the RB-level interference suppression matrices merged in a spatial domain; and a calculation module, configured to calculate port-level and UE-level Doppler shift estimations according to the equivalent channel estimations.

According to another embodiment of the present application, a storage medium is also provided, which may have a computer program stored therein for performing, at runtime, the operations in any one of the above method embodiments.

According to yet another embodiment of the present application, an electronic device is also provided, which may include a memory and a processor. The memory may have a computer program stored therein. The processor may be configured to run the computer program to perform the operations in any one of the above method embodiments.

Through the embodiments of the present application, spatial domain interference suppression is performed on the channel frequency response estimations of an antenna array, so that the poor Doppler shift estimation accuracy problem of a target cell due to the interference from neighboring cells can be solved. In addition, the intra-frequency interference from neighbouring cells can be effectively compressed, and a higher Doppler shift estimation accuracy can be achieved by a lower computation overhead.

**Brief Description of the Drawings**

The accompanying drawings described herein are used to provide a further understanding of the present application, and constitute a part of the present application, and the exemplary embodiments of the present application and the description thereof are used to explain the present application, but do not constitute improper limitations to the present application. In the drawings:

Fig. 1 is a flowchart of a method to determine a Doppler shift according to an embodiment of the present application.

Fig. 2 is a structural block diagram of an apparatus to determine a Doppler shift according to an embodiment of the present application.

**Detailed Description**

The present application is described below with reference to the drawings and in conjunction with the embodiments in detail. It should be noted that embodiments in the present application and features in the embodiments may be combined under the condition of no conflicts.

It should be noted that the specification and claims of the present application and the terms "first", "second" and the like in the drawings are used to distinguish similar objects, and do not need to describe a specific sequence or a precedence order.

Embodiment 1

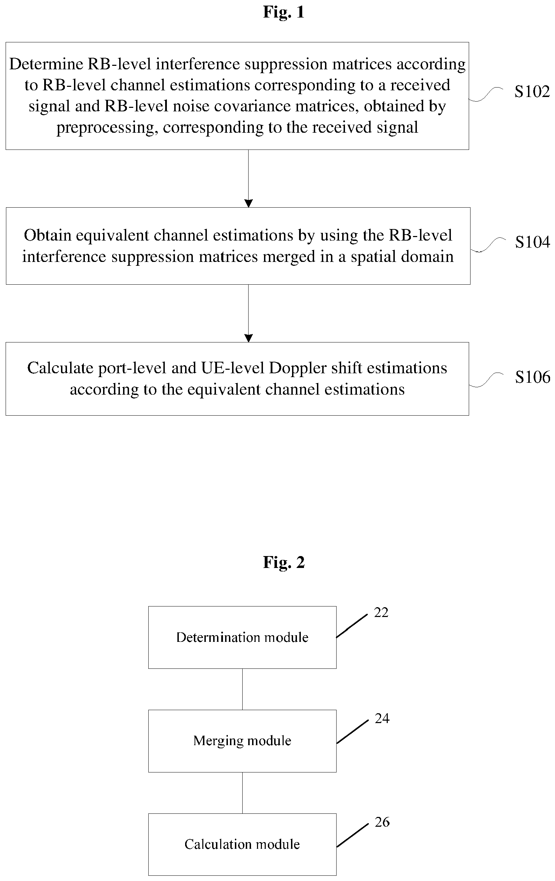

In the present embodiment, a method to determine a Doppler shift is provided. Fig. 1 is a flowchart of a method to determine a Doppler shift according to an embodiment of the present application. As shown in Fig. 1, the flow includes the following operations.

In operation S102, RB-level interference suppression matrices are determined according to RB-level channel estimations corresponding to a received signal and RB-level noise covariance matrices, obtained by pre-processing, corresponding to the received signal.

In operation S104, equivalent channel estimations are obtained by using the RB-level interference suppression matrices merged in a spatial domain.

In operation S106, port-level and UE-level Doppler shift estimations are calculated according to the equivalent channel estimations.

In at least one exemplary embodiment, the RB-level channel estimations $\mathbf{H}_{O_i,rb}$ are determined by the following equation:

$$\mathbf{H}_{O_i,rb} = \sum_{k=0}^{N_{rsPerRB}-1} \mathbf{H}_{O_i,k} \bigg/ N_{rsPerRB} \in \square^{\,N_{ante}\times N_{port}} \, ,$$

where represents the subcarrier-level channel estimation, $i$ represents an index of an OFDM symbol $O_i$, $N_{rsPerRB}$ represents the number of channel estimations within RB granularity, represents the number of receiving antennas, $N_{port}$ represents the number of ports, and $\square$ represents a complex domain.

In at least one exemplary embodiment, the RB-level noise covariance matrices **Rnn** are determined by the following equation:

$$\mathbf{Rnn}_{O_i,RB} = \mathbf{ni}_{O_i,rb} \cdot \left(\mathbf{ni}_{O_i,rb}\right)^{H} \bigg/ N_{rsPerRB} \in \square^{\,N_{ante}\times N_{ante}} \, ,$$

where $N_{rsPerRB}$ represents the number of channel estimations within RB granularity, and $\mathbf{ni}_{O_i,rb} \in \square^{\,N_{ante}\times N_{rsPRB}}$ represents a subcarrier-level noise estimation.

Specifically, the subcarrier-level channel estimation and the subcarrier-level noise estimation may be obtained in the following procedures.

1. A signal received at a pilot time-frequency position is multiplied by the conjugate of a pilot sequence to remove the mother code of the pilot sequence, so as to obtain a pilot estimation under a Least Square (LS) criterion, which is abbreviated as $\mathbf{H}_{ls}$.

2. Time domain $\mathbf{h}_{ls}$ is obtained from $\mathbf{H}_{ls}$ by Inverse Fast Fourier Transform (IFFT).

3. A filtered time domain channel estimation $\mathbf{h}_{ls}$ is obtained based on $\mathbf{h}_{ls}$ by using a certain window size (for example, a window with a CP length) and taking a time domain maximum tap (the maximum tap represents a main path component in multi-path channels) of $\mathbf{h}_{ls}$ as the filter center.

4. $\tilde{\mathbf{h}}_{ls}$ is transformed to frequency domain by Fast Fourier Transform (FFT) to obtain a filtered subcarrier-level frequency response estimation $\mathbf{H}_{ls}$.

5. The subcarrier-level noise estimation can be obtained by $\mathbf{H}_{ls}$ - $\mathbf{H}_{ls}$.

By merging the subcarrier-level channel estimations and the subcarrier-level noise estimations into RB-level channel estimations and RB-level noise estimations, the channel estimation accuracy within the coherence bandwidth can be improved. Since the channel frequency response estimations within the coherent bandwidth remain unchanged, the effect of suppressing Gaussian white noise is achieved by accumulating multiple frequency response estimations. In addition, unnecessary overhead can be reduced in the above procedure.

In at least one exemplary embodiment, the RB-level noise covariance matrices are subjected to the following pre-processing: summing and averaging the RB-level noise covariance matrices of multiple OFDM symbols; and performing diagonal loading and inverse calculation on RB-level noise covariance matrix obtained from summing and averaging the multiple noise covariance matrices.

In at least one exemplary embodiment, the RB-level noise covariance matrix $\mathbf{Rnn}_{RB}$ obtained from summing and averaging the multiple noise covariance matrices is determined by the following equation:

$$\mathbf{Rnn}_{RB} = \sum_{i=0}^{N_{RS}-1} \mathbf{Rnn}_{O_i,RB} \bigg/ N_{RS} \in \square^{\,N_{ante}\times N_{ante}} \, ,$$

where $N_{RS}$ represents the number of OFDM symbols.

In at least one exemplary embodiment, the operation of performing the diagonal loading and the inverse calculation on the RB-level noise covariance matrix obtained from summing and averaging the multiple noise covariance matrices can be implemented by the following equation:

$$\mathbf{iRnn}_{RB} = \left( \mathbf{Rnn}_{RB} + \alpha \cdot \left( \sum_{i=1}^{N_{ante}} \mathbf{Rnn}_{RB}(i,i) \right) \middle/ N_{ante} \cdot \mathbf{I}_{N_{ante} \times N_{ante}} \right)^{-1} \in \square^{N_{ante} \times N_{ante}} ,$$

where $\mathbf{iRnn}_{RB}$ represents an output result of the diagonal loading and the inverse calculation on $\mathbf{Rnn}_{RB}$, $\alpha \in \square^{1 \times 1}$ represents a diagonal loading factor, and $\mathbf{Rnn}_{RB}(i,i)$ represents a diagonal element with index $(i,i)$.

Specifically, as the matrix $\mathbf{Rnn}_{RB}$ may lack rank and therefore cannot be correctly inverted, the diagonal loading is performed to ensure full rank of $\mathbf{Rnn}_{RB}$. Furthermore, an alternative $\alpha \in \square^{1 \times 1}$ configuration mode is 0.1.

In at least one exemplary embodiment, the RB-level interference suppression matrices are determined at least by the following equation:

$$\mathbf{G}_{rb} = \left( \mathbf{H}_{O_i,rb}^H \cdot \mathbf{iRnn}_{RB} \cdot \mathbf{H}_{O_i,rb} + \mathbf{I}_{N_{port} \times N_{port}} \right)^{-1} \mathbf{H}_{O_i,rb}^H \cdot \mathbf{iRnn}_{RB} \in \square^{N_{port} \times N_{ante}} ,$$

or,

$$\mathbf{G}_{rb} = \mathbf{H}_{O_i,rb}^H \left( \mathbf{H}_{O_i,rb} \mathbf{H}_{O_i,rb}^H + \mathbf{Rnn}_{RB} \right)^{-1} \in \square^{N_{port} \times N_{ante}}$$

where $\mathbf{iRnn}_{RB}$ represents an output result of the diagonal loading and the inverse calculation on $\mathbf{Rnn}_{RB}$, and $\mathbf{H}_{O_i,rb}^H$ represents a channel estimation of an $i$-th OFDM symbol $O_i$ used within a preset time period when calculating $\mathbf{G}_{rb}$.

Specifically, the purpose of the above equation is that the covariance matrix of neighboring cell interference is included in $\mathbf{Rnn}_{RB}$, and the interference signal can be effectively nulled using an interference suppression method, that is, the interference suppression can null an incoming signal from the direction of the interference signal.

In at least one exemplary embodiment, the operation of obtaining the equivalent channel estimations by using the RB-level interference suppression matrices merged in the spatial domain includes that: interference suppression is performed on all OFDM symbols within the preset time period in the spatial domain by using a weight value.

In at least one exemplary embodiment, the equivalent channel is calculated by the following equation:

$$\overline{\mathbf{H}_{O_i,rb}} = \mathbf{G}_{rb} \mathbf{H}_{O_i,rb} \in \square^{N_{port} \times N_{port}} ,$$

where $\mathbf{G}_{rb}$ represents the weight value.

It should be noted that the equivalent channel after interference suppression is reduced in dimension.

In at least one exemplary embodiment, the operation of calculating the port-level and UE-level Doppler shift estimations according to the equivalent channel estimations may include that: multiple Doppler shift estimations of a designated port are determined according to the equivalent channel estimations; frequency domain average is performed on the multiple Doppler shift estimations of the designated port to obtain the final port-level Doppler shift; and port-level average is performed on multiple port-level Doppler shift estimations to obtain the UE-level Doppler shift estimations.

In at least one exemplary embodiment, the Doppler shift estimations of the designated port are calculated by the following equation:

$$fd_{rb}(p) = \frac{angle\left( \left( \overline{\mathbf{H}_{O_0,rb}}(p,p) \right)^H \cdot \overline{\mathbf{H}_{O_i,rb}}(p,p) \right)}{2\pi \cdot \Delta_i} \in \square^{1 \times 1} ,$$

where $angle(.)$ represents the radian calculation, $\overline{H_{O_i,rb}}(p,p) \in \square^{1 \times 1}$ represents a diagonal element with index $(p,p)$, $p = \{1,...,N_{port}\}$, and $\Delta_i$ represents the time interval between OFDM symbols $O_i$ and $O_0$ with pilots.

It should be noted that before calculating the Doppler shift estimation of the designated port, it is first needed to prove that the equivalent channel after interference suppression of the two OFDM symbols can correctly estimate the Doppler shift. The specific proving process is provided as follows.

For an OFDM symbol $O_0$ and any OFDM symbol $O_i$ ($i = \{1,..., N_{RS} - 1\}$), the following formula is satisfied:

$$
\begin{aligned}
\left( \overline{\mathbf{H}_{O_0,rb}}\left(p,p\right) \right)^H \overline{\mathbf{H}_{O_i,rb}}\left(p,p\right) \\
= \left( \mathbf{G}_{rb}\left(p,:\right) \mathbf{H}_{O_0,rb}\left(:,p\right) \right)^H \mathbf{G}_{rb}\left(p,:\right) \mathbf{H}_{O_i,rb}\left(:,p\right) \\
= \left( \mathbf{G}_{rb}\left(p,:\right) \mathbf{H}_{O_0,rb}\left(:,p\right) \right)^H \mathbf{G}_{rb}\left(p,:\right) \mathbf{H}_{O_0,rb}\left(:,p\right) \cdot \exp\left(2\pi \cdot fd \cdot \Delta_i\right) \\
= \left| \mathbf{G}_{rb}\left(p,:\right) \mathbf{H}_{O_0,rb}\left(:,p\right) \right|^2 \cdot \exp\left(2\pi \cdot fd \cdot \Delta_i\right) \in \square^{1\times 1}
\end{aligned}
$$

where, $H_{O_0,rb}(:,p) \in \square^{N_{ante}\times 1}$ represents all rows of the $p$-th column, $\mathbf{G}_{rb}(p,:) \in \square^{1\times N_{ante}}$ represents all columns of p-th row, and $fd$ represents a Doppler shift (Hz) to be estimated.

In addition, the present embodiment also provides a scenario of determining the Doppler shift under two reference channels including SRS and DMRS. It should be noted that other signals capable of implementing the following scenarios are within the scope of the present embodiment and are not overly detailed herein.

There are several main requirements:

1) SRS is an uplink reference signal, generally, UE does not perform beamforming operation on SRS, and needs to perform beamforming operation on uplink and downlink DMRS.

2) Doppler shift can be estimated by using DMRS, and since DMRS is subjected to beamforming and the beamforming weights are generally slot-level, DMRS estimations on two OFDM symbols used for calculating the phase difference need to belong to the same slot so as to ensure the same beamforming weights.

3) It is considered that Doppler shift can be estimated using SRS, and since SRS is generally not subjected to beamforming, Doppler shift can be calculated using SRSs of multiple channel estimations.

4) If SRS is subjected to beamforming, similar to the case of DMRS, the SRS with the same weights need to be used for the Doppler shift estimation.

5) To estimate a Doppler shift using DMRSs and SRSs of different OFDM symbols, it is necessary to ensure that a time interval between two OFDM symbols is less than 1/2 $fd$ in order that Doppler shift periodic ambiguity does not occur.

Scenario 1:

An SRS-based Doppler shift estimation method includes the following operations.

In operation 1, RB-level channel estimations are calculated.

On a subcarrier $k \in \Psi_{SRS}$, where $\Psi_{SRS}$ represents a subcarrier set with SRS channel estimation, it is considered that there are SRS channel estimations of $i = \{0,...,N_{SRS} -1\}$ OFDM symbols in a certain time period. $N_{SRS}$ is the number of OFDM symbols with SRS. For the $i$-th ($i = \{0,...,N_{SRS}-1\}$) OFDM symbol, the RB-level channel estimation is calculated as:

$$
\mathbf{H}_{O_i,rb} = \sum_{k=0}^{N_{srsPerRB}-1} \mathbf{H}_{O_i,k} \Big/ N_{srsPerRB} \in \square^{N_{ante}\times N_{port}},
$$

where $\mathbf{H}_{O_i,rb}$ is a RB-level channel estimation, $\mathbf{H}_{O_i,k}$ is a subcarrier-level SRS channel estimation, $O_i$ is an $i$-th OFDM symbol with SRS estimation, $N_{srsperRB}$ is the number of subcarriers within RB granularity, is the number of receiving antennas, and $N_{port}$ is the number of ports.

In operation 2, diagonal loading and inverse of a RB-level noise covariance matrix (**Rnn**) are performed.

In sub-operation a), a RB-level $\mathbf{Rnn}_{O_i,RB}$ on an OFDM symbol $O_i$ ($i = \{0,..., N_{SRS} -1\}$) is calculated as:

$$
\mathbf{Rnn}_{O_i,RB} = \mathbf{ni}_{O_i,rb} \cdot \left( \mathbf{ni}_{O_i,rb} \right)^H \Big/ N_{srsPerRB} \in \square^{N_{ante}\times N_{ante}},
$$

where $\mathbf{ni}_{O_{i},rb} \in \square^{N_{ante} \times N_{srsPerRB}}$ is a noise estimation within RB granularity, and $(.)^{H}$ represents conjugate transposition.

In sub-operation b), matrices **Rnn** of multiple OFDM symbols are summed and averaged to obtain:

$$\mathbf{Rnn}_{RB} = \sum_{i=0}^{N_{SRS}-1} \mathbf{Rnn}_{O_{i},RB} \bigg/ N_{SRS} \in \square^{N_{ante} \times N_{ante}}.$$

In sub-operation c), diagonal loading and inverse of $\mathbf{Rnn}_{RB}$ are calculated to obtain:

$$\mathbf{iRnn}_{RB} = \left( \mathbf{Rnn}_{RB} + \alpha \cdot \left( \sum_{i=1}^{N_{ante}} \mathbf{Rnn}_{RB}(i,i) \right) \bigg/ N_{ante} \cdot \mathbf{I}_{N_{ante} \times N_{ante}} \right)^{-1} \in \square^{N_{ante} \times N_{ante}},$$

where, $\mathbf{iRnn}_{RB}$ is the result of diagonal loading and inverse, $\alpha$ is a diagonal loading factor, $\mathbf{Rnn}_{RB}(i,i)$ represents an element $(i,i)$, and $(.)^{-1}$ represents matrix inverse.

In operation 3, a RB-level interference suppression matrix is calculated.

RB-level IRC matrix $\mathbf{G}_{k} \in \square^{N_{port} \times N_{ante}}$ is calculated as:

$$\mathbf{G}_{rb} = \left( \mathbf{H}_{O_{0},rb}^{H} \mathbf{iRnn}_{RB} \mathbf{H}_{O_{0},rb} + \mathbf{I}_{N_{port} \times N_{port}} \right)^{-1} \mathbf{H}_{O_{0},rb}^{H} \mathbf{iRnn}_{RB} \in \square^{N_{port} \times N_{ante}}.$$

In operation 4, an equivalent channel after spatial domain interference suppression is calculated.

For an OFDM symbol $O_{i}$ ($i = \{0,..., N_{SRS} -1\}$), a RB-level IRC equivalent channel is calculated as:

$$\overline{\mathbf{H}_{O_{i},rb}} = \mathbf{G}_{rb} \mathbf{H}_{O_{i},rb} \in \square^{N_{port} \times N_{port}}.$$

The above equation calculates the IRC equivalent channel for all OFDM symbols with SRS estimation respectively.

In operation 5, a port-level (or UE-level) frequency offset estimation is calculated.

For an equivalent channel $\overline{\mathbf{H}_{Di,rb}}$ after IRC, it is considered that SRS estimations of an OFDM symbol $O_{0}$ and any OFDM symbol $O_{i}$ ($i = \{1,...,N_{RS} -1\}$) satisfy:

$$\left( \overline{\mathbf{H}_{O_{0},rb}}(p,p) \right)^{H} \overline{\mathbf{H}_{O_{i},rb}}(p,p) = \left| \mathbf{G}_{rb}(p,:)\mathbf{H}_{O_{0},rb}(:,p) \right|^{2} \cdot \exp\left( 2\pi \cdot fd \cdot \Delta_{i} \right) \in \square^{1 \times 1},$$

where $\overline{\mathbf{H}_{Oi,rb}}(p,p) \in \square^{1 \times 1}$ represents an element $(p,p)$, $p = \{1,...,N_{port}\}$, $\mathbf{H}_{O0,rb}(:,p) \in \square^{N_{ante} \times 1}$ represents all rows with $p$-th column, $\mathbf{G}_{rb}(p,:) \in \square^{1 \times N_{ante}}$ represents all columns with p-th row, $fd$ represents a Doppler shift (Hz) to be estimated, and $\Delta_{i}$ represents a time interval (with a unit of second) between OFDM symbol $O_{i}$ and OFDM symbol $\overline{O_{0}}$.

Therefore, for port $p$, the Doppler shift estimation is

$$fd_{rb}(p) = \frac{angle\left( \left( \overline{\mathbf{H}_{O_{0},rb}}(p,p) \right)^{H} \cdot \overline{\mathbf{H}_{O_{i},rb}}(p,p) \right)}{2\pi \cdot \Delta_{i}} \in \square^{1 \times 1},$$

where $angle(.)$ represents the radian calculation, and if SRSs of more than two OFDM symbols are used, the obtained Doppler shift value may be averaged.

The port-level frequency offset estimations are obtained by performing frequency domain dimension averaging on $fd_{rb}(p)$:

$$fd_{port} = mean\left( fd_{rb}(p) \right).$$

The UE-level frequency offset estimation is obtained by performing port dimension averaging on $fd_{port}$:

$$fd_{ue} = \mathrm{mean}\left( fd_{port} \right).$$

Scenario 2:
A DMRS-based Doppler shift estimation method includes the following operations.

In operation 1, RB-level channel estimations are calculated.

On a subcarrier $k \in \Psi_{DMRS}$, where $\Psi_{DMRS}$ represents a subcarrier set with DMRS channel estimation, it is considered that there are DMRS channel estimations of $i = \{0,...,N_{dmrsPerSlot} - 1\}$ OFDM symbols in a certain slot. $N_{dmrsPerSlot}$ is the number of OFDM symbols with DMRSs. For each OFDM symbol $O_i$, the RB-level channel estimation is calculated as:

$$\mathbf{H}_{O_i,rb} = \left. \sum_{k=0}^{N_{dmrsPerRB}-1} \mathbf{H}_{O_i,k} \middle/ N_{dmrsPerRB} \right. \in \square^{N_{ante} \times N_{port}},$$

where $\mathbf{H}_{O_i,rb}$ is a RB-level channel estimation, $\mathbf{H}_{O_i,k}$ is a subcarrier-level DMRS channel estimation, $O_i$ represents an index of an OFDM symbol, $N_{dmrsPerRB}$ is the number of DMRS channel estimations within RB granularity, is the number of receiving antennas, and $N_{port}$ is the number of ports.

In operation 2, diagonal loading and inverse of a RB-level noise covariance matrix ($\mathbf{Rnn}$) are performed.

In sub-operation a), a RB-level $\mathbf{Rnn}_{O_i,RB}$ on an OFDM symbol $O_i$ ($i = \{0,...,N_{dmrsPerSlot} -1\}$) is calculated as:

$$\mathbf{Rnn}_{O_i,RB} = \left. \mathbf{ni}_{O_i,rb} \cdot \left( \mathbf{ni}_{O_i,rb} \right)^H \middle/ N_{dmrsPerRB} \right. \in \square^{N_{ante} \times N_{ante}},$$

where $\mathbf{ni}_{O_i,rb} \in \square^{N_{ante} \times N_{srsPerRB}}$ is a noise estimation within RB granularity, and $(.)^H$ represents conjugate transposition.

In sub-operation b), matrices $\mathbf{Rnn}$ of multiple OFDM symbols are summed and averaged to obtain:

$$\mathbf{Rnn}_{RB} = \left. \sum_{i=0}^{N_{dmrsPerSlot}-1} \mathbf{Rnn}_{O_i,RB} \middle/ N_{dmrsPerSlot} \right. \in \square^{N_{ante} \times N_{ante}}.$$

In sub-operation c), diagonal loading and inverse of $\mathbf{Rnn}_{RB}$ are calculated to obtain:

$$\mathbf{iRnn}_{RB} = \left( \mathbf{Rnn}_{RB} + \alpha \cdot \left( \sum_{i=1}^{N_{ante}} \mathbf{Rnn}_{RB}(i,i) \right) \middle/ N_{ante} \cdot \mathbf{I}_{N_{ante} \times N_{ante}} \right)^{-1} \in \square^{N_{ante} \times N_{ante}},$$

where, $\mathbf{iRnn}_{RB}$ is a result of diagonal loading and inverse, $\alpha$ is a diagonal loading factor, $\mathbf{Rnn}_{RB}(i,i)$ represents an element $(i,i)$, and $(.)^{-1}$ represents matrix inverse.

In operation 3, a RB-level interference suppression matrix is calculated.

RB-level IRC matrix $\mathbf{G}_k \in \square^{N_{port} \times N_{ante}}$ is calculated as:

$$\mathbf{G}_{rb} = \left( \mathbf{H}_{O_0,rb}^H \mathbf{iRnn}_{RB} \mathbf{H}_{O_0,rb} + \mathbf{I}_{N_{port} \times N_{port}} \right)^{-1} \mathbf{H}_{O_0,rb}^H \mathbf{iRnn}_{RB} \in \square^{N_{port} \times N_{ante}}.$$

In operation 4, an equivalent channel after spatial domain interference suppression is calculated.

For an OFDM symbol $O_i$ ($i = \{0,...,N_{dmrsPerSlot} -1\}$), a RB-level IRC equivalent channel is calculated as:

$$\overline{\mathbf{H}_{O_i,rb}} = \mathbf{G}_{rb} \mathbf{H}_{O_i,rb} \in \square^{N_{port} \times N_{port}}.$$

The above equation calculates the IRC equivalent channel for all OFDM symbols with SRS estimation respectively.

In operation 5, a port-level (or UE-level) frequency offset estimation is calculated.

For an equivalent channel $\overline{\mathbf{H}_{D_i,rb}}$ after IRC, it is considered that DMRSs estimations of an OFDM symbol $O_0$ and any OFDM symbol $O_i$ ($i$ = {1,...,$N_{dmrsPerSlot}$ -1}) satisfy:

$$\left(\overline{\mathbf{H}_{O_0,rb}}\left(p,p\right)\right)^H \overline{\mathbf{H}_{O_i,rb}}\left(p,p\right)=\left|\mathbf{G}_{rb}\left(p,:\right)\mathbf{H}_{O_0,rb}\left(:,p\right)\right|^2 \cdot \exp\left(2\pi \cdot fd \cdot \Delta_i\right) \in \square^{1\times 1},$$

where $\overline{\mathbf{H}_{Oi,rb}}$ ($p$, $p$) $\in \square^{1\times 1}$ represents an element ($p$,$p$), $p$ = {1,...,$N_{port}$} , $\mathbf{H}_{O_0,rb}(:, p) \in \square^{N_{ante}\times 1}$ represents all rows of p-th column, $\mathbf{G}_{rb}(p,:) \in \square^{1\times N_{ante}}$ represents all columns of p-th row, $fd$ represents the Doppler shift (Hz) to be estimated, and $\Delta_i$ represents a time interval (with a unit of second) between an OFDM symbol $O_i$ and an OFDM symbol $O_0$.

Therefore, for port $p$, the Doppler shift estimation is

$$fd_{rb}\left(p\right)=\frac{angle\left(\left(\overline{\mathbf{H}_{O_0,rb}}\left(p,p\right)\right)^H \cdot \overline{\mathbf{H}_{O_i,rb}}\left(p,p\right)\right)}{2\pi \cdot \Delta_i} \in \square^{1\times 1},$$

where $angle$ (.) represents the radian calculation, and if DMRSs of more than two OFDM symbols are used, the obtained Doppler shift value may be averaged.

The port-level frequency offset estimations are obtained by performing frequency domain dimension averaging on $fd_{rb}(p)$:

$$fd_{port} = \text{mean}\left(fd_{rb}\left(p\right)\right).$$

The UE-level frequency offset estimation is obtained by performing port dimension averaging on $fd_{port}$ of the UE:

$$fd_{ue} = \text{mean}\left(fd_{port}\right).$$

Through the description of the above implementation modes, technicians in related area can clearly understand that the method according to the above embodiment may be implemented by means of software plus a necessary general hardware platform, and of course, may also be implemented through hardware, but in many cases, the former is a better implementation. Based on such understanding, the technical solution of the present application, which is essential or contributes to the conventional art, may be embodied in the form of a software product stored in a storage medium (such as a Read-Only Memory (ROM)/Random Access Memory (RAM), a magnetic disk and an optical disc), including a number of instructions for causing a terminal device (which may be a mobile phone, a computer, a server, or a network device, etc.) to perform the methods described in various embodiments of the present application.

Embodiment 2

In the present embodiment, an apparatus to determine a Doppler shift is also provided, which is configured to implement the above embodiments and exemplary implementations, and the description thereof has been omitted. As used below, the term "module" may implement a combination of software and/or hardware of a predetermined function. Although the apparatus described in the following embodiments is preferably implemented by software, hardware or a combination of software and hardware is also possible and conceived.

Fig. 2 is a structural block diagram of an apparatus to determine a Doppler shift according to an embodiment of the present application. As shown in Fig. 2, the apparatus includes a determination module 22, a merging module 22, and a calculation module 26.

The determination module 22 is configured to determine RB-level interference suppression matrices according to RB-level channel estimations corresponding to a received signal and RB-level noise covariance matrices, obtained by pre-processing, corresponding to the received signal.

The merging module 24 is configured to obtain equivalent channel estimations by using the RB-level interference suppression matrices merged in a spatial domain.

The calculation module 26 is configured to calculate port-level and UE-level Doppler shift estimations according to the equivalent channel estimations.

It is to be noted that each of the above modules may be implemented by software or hardware. The latter may be implemented by, but not limited to, the following manners: the above modules are all located in the same processor; or, the above modules are located in different processors respectively in any combination form.

Embodiment 3

The embodiment of the present application also provides a storage medium having a computer program stored therein for performing, at runtime, the operations in any one of the above method embodiments.

In at least one exemplary embodiment, in the present embodiment, the storage medium may be configured to store the computer program for performing the following operations.

In S1, RB-level interference suppression matrices are determined according to RB-level channel estimations corresponding to a received signal and RB-level noise covariance matrices, obtained by pre-processing, corresponding to the received signal.

In S2, equivalent channel estimations are obtained by using the RB-level interference suppression matrices merged in a spatial domain.

In S3, port-level and UE-level Doppler shift estimations are calculated according to the equivalent channel estimations.

In at least one exemplary embodiment, the storage medium may include, but is not limited to, various media capable of storing a computer program such as a U disk, a ROM, a RAM, a mobile hard disk, a magnetic disk or an optical disc.

The embodiment of the present application also provides an electronic device, which includes a memory and a processor. The memory stores a computer program. The processor is configured to run the computer program to perform the operations in any one of the above method embodiments.

In at least one exemplary embodiment, the electronic device may further include a transmission device and an input/output device, where the transmission device is connected to the processor, and the input/output device is connected to the processor.

In at least one exemplary embodiment, the processor may be configured to perform the following operations through the computer program.

In S1, RB-level interference suppression matrices of are determined according to RB-level channel estimations corresponding to a received signal and RB-level noise covariance matrices, obtained by pre-processing, corresponding to the received signal.

In S2, equivalent channel estimations are obtained by using the RB-level interference suppression matrices merged in a spatial domain.

In S3, port-level and UE-level Doppler shift estimations are calculated according to the equivalent channel estimations.

In at least one exemplary embodiment, a specific example in the present embodiment may refer to the examples described in the above embodiments and exemplary implementations, and details are not described herein in the present embodiment.

It is apparent that technicians in related area should understand that the above-mentioned modules or operations of the present application may be implemented by a general-purpose computing device, and they may be centralized on a single computing device or distributed on a network composed of multiple computing devices. Optionally, they may be implemented with program codes executable by a computing device, so that they may be stored in a storage device and executed by the computing device, and in some cases, the operations shown or described may be performed in a different order than here, or they are separately made into individual integrated circuit modules, or multiple modules or operations therein are made into a single integrated circuit module for implementation. As such, the present application is not limited to any particular combination of hardware and software.

The above is only the exemplary embodiments of the present application, not intended to limit the present application. As will occur to those skilled in the art, the present application is susceptible to various modifications and changes. Any modifications, equivalent replacements, improvements and the like made within the principle of the present application shall fall within the scope of protection of the present application.

**Industrial Applicability**

Through the present application, spatial domain interference suppression is performed on channel frequency response estimations from an antenna array, so that the problem of poor Doppler shift estimation accuracy in a target cell due to the interference from neighboring cells can be solved. In addition, the intra-frequency interference from neighbouring cells can be effectively compressed, and a higher Doppler shift estimation accuracy can be achieved by a lower computation overhead.

**Claims**

1. A method to determine a Doppler shift, comprising:

   determining Resource Block-level, RB-level, interference suppression matrices of according to RB-level channel estimations corresponding to a received signal and RB-level noise covariance matrices, obtained by pre-processing, corresponding to the received signal;
   obtaining equivalent channel estimations by using the RB-level interference suppression matrices merged in a spatial domain; and
   calculating port-level and user equipment-level, UE-level, Doppler shift estimations according to the equivalent channel estimations.

2. The method according to claim 1, wherein the RB-level channel estimations $\mathbf{H}_{O_i,rb}$ are determined by the following equation:

$$\mathbf{H}_{O_i,rb} = \sum_{k=0}^{N_{rsPerRB}-1} \mathbf{H}_{O_i,k} \bigg/ N_{rsPerRB} \in \square^{N_{ante} \times N_{port}},$$

   where $\mathbf{H}_{O_i,k}$ represents a subcarrier-level channel estimation, $i$ represents an index of Orthogonal Frequency Division Multiplexing, OFDM, symbol $O_i$, $N_{rsperRB}$ represents the number of channel estimations within RB granularity, represents the number of receiving antennas, $N_{port}$ represents the number of ports, and $\square$ represents a complex domain.

3. The method according to claim 1, wherein the RB-level noise covariance matrices **Rnn** are determined by the following equation:

$$\mathbf{Rnn}_{O_i,RB} = \mathbf{ni}_{O_i,rb} \cdot \left(\mathbf{ni}_{O_i,rb}\right)^H \bigg/ N_{rsPerRB} \in \square^{N_{ante} \times N_{ante}},$$

   where $N_{rsPerRB}$ represents the number of channel estimations within RB granularity, and $\mathbf{ni}_{O_i,rb} \in \square^{Nante \times NrsPerRB}$ represents a subcarrier-level noise estimation.

4. The method according to claim 3, wherein the RB-level noise covariance matrices are subjected to the following pre-processing:

   summing and averaging the RB-level noise covariance matrices of multiple OFDM symbols; and
   performing diagonal loading and inverse calculation on a RB-level noise covariance matrix obtained from summing and averaging the multiple noise covariance matrices.

5. The method according to claim 3, wherein the RB-level noise covariance matrix $\mathbf{Rnn_{RB}}$ obtained from summing and averaging the multiple noise covariance matrices is determined by the following equation:

$$\mathbf{Rnn}_{RB} = \sum_{i=0}^{N_{RS}-1} \mathbf{Rnn}_{O_i,RB} \bigg/ N_{RS} \in \square^{N_{ante} \times N_{ante}},$$

   where $N_{RS}$ represents the number of OFDM symbols.

6. The method according to claim 4, wherein performing the diagonal loading and inverse calculation on the RB-level noise covariance matrix obtained from summing and averaging the multiple noise covariance matrices is implemented by the following equation:

$$\mathbf{iRnn}_{RB} = \left( \mathbf{Rnn}_{RB} + \alpha \cdot \left( \sum_{i=1}^{N_{ante}} \mathbf{Rnn}_{RB}(i,i) \right) \Big/ N_{ante} \cdot \mathbf{I}_{N_{ante} \times N_{ante}} \right)^{-1} \in \square^{\, N_{ante} \times N_{ante}},$$

where $\mathbf{iRnn}_{RB}$ represents an output result of the diagonal loading and the inverse calculation on $\mathbf{Rnn}_{RB}$, $\alpha \in \square^{1 \times 1}$ represents a diagonal loading factor, and $\mathbf{Rnn}_{RB}(i,i)$ represents a diagonal element with index $(i,i)$.

7. The method according to any one of claims 1-6, wherein the RB-level interference suppression matrices are determined at least by the following equation:

$$\mathbf{G}_{rb} = \left( \mathbf{H}_{O_i,rb}^{H} \cdot \mathbf{iRnn}_{RB} \cdot \mathbf{H}_{O_i,rb} + \mathbf{I}_{N_{port} \times N_{port}} \right)^{-1} \mathbf{H}_{O_i,rb}^{H} \cdot \mathbf{iRnn}_{RB} \in \square^{\, N_{port} \times N_{ante}},$$

or,

$$\mathbf{G}_{rb} = \mathbf{H}_{O_i,rb}^{H} \left( \mathbf{H}_{O_i,rb} \mathbf{H}_{O_i,rb}^{H} + \mathbf{Rnn}_{RB} \right)^{-1} \in \square^{\, N_{port} \times N_{ante}},$$

where $\mathbf{iRnn}_{RB}$ represents an output result of the diagonal loading and the inverse calculation on $\mathbf{Rnn}_{RB}$, and represents a channel estimation of an $i$-th OFDM symbol $O_i$ used within a preset time period when calculating $\mathbf{G}_{rb}$.

8. The method according to claim 7, wherein obtaining the equivalent channel estimations by using the RB-level interference suppression matrices merged in the spatial domain comprises:
performing interference suppression on all OFDM symbols within the preset time period in the spatial domain by using a weight value.

9. The method according to claim 7, wherein the equivalent channel is calculated by the following equation:

$$\overline{\mathbf{H}_{O_i,rb}} = \mathbf{G}_{rb} \mathbf{H}_{O_i,rb} \in \square^{\, N_{port} \times N_{port}},$$

where $\mathbf{G}_{rb}$ represents the weight value.

10. The method according to claim 9, wherein calculating the port-level and UE-level Doppler shift estimations according to the equivalent channel estimations comprises:

determining multiple Doppler shift estimations of a designated port according to the equivalent channel estimations;
performing frequency domain average on the multiple Doppler shift estimations of the designated port to obtain the port-level Doppler shift estimations; and
performing port-level average on the port-level Doppler shift estimations to obtain the UE-level Doppler shift estimations.

11. The method according to claim 10, wherein the Doppler shift estimations of the designated port are calculated by the following equation:

$$fd_{rb}(p) = \frac{angle\left( \left( \overline{\mathbf{H}_{O_0,rb}}(p,p) \right)^{H} \cdot \overline{\mathbf{H}_{O_i,rb}}(p,p) \right)}{2\pi \cdot \Delta_i} \in \square^{\, 1 \times 1},$$

where $angle(.)$ represents radian calculation, $\overline{\mathbf{H}_{O_i,rb}}(p,p) \in \square^{\, 1 \times 1}$ represents a diagonal element with index $(p,p)$, $p = \{1,..., N_{port}\}$, and $\Delta_i$ represents a time interval between OFDM symbols $O_i$ and $O_0$ with pilots.

12. An apparatus to determine a Doppler shift, comprising:

a determination module, configured to determine Resource Block-level, RB-level, interference suppression matrices according to RB-level channel estimations corresponding to a received signal and RB-level noise covariance matrices, obtained by pre-processing, corresponding to the received signal;

a merging module, configured to obtain equivalent channel estimations by using the RB-level interference suppression matrices merged in a spatial domain; and

a calculation module, configured to calculate port-level and user equipment-level, UE-level, Doppler shift estimations according to the equivalent channel estimations.

13. A storage medium, having a computer program stored therein for performing, at runtime, the method according to any one of claims 1 to 11.

14. An electronic device, comprising a memory and a processor, wherein the memory has a computer program stored therein, and the processor is configured to run the computer program to perform the method according to any one of claims 1 to 11.

**Fig. 1**

Determine RB-level interference suppression matrices according to RB-level channel estimations corresponding to a received signal and RB-level noise covariance matrices, obtained by preprocessing, corresponding to the received signal —— S102

Obtain equivalent channel estimations by using the RB-level interference suppression matrices merged in a spatial domain —— S104

Calculate port-level and UE-level Doppler shift estimations according to the equivalent channel estimations —— S106

**Fig. 2**

Determination module —— 22

Merging module —— 24

Calculation module —— 26

## INTERNATIONAL SEARCH REPORT

| | | International application No. |
|---|---|---|
| | | **PCT/CN2019/115779** |

**A.    CLASSIFICATION OF SUBJECT MATTER**

H04L 25/03(2006.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 多普勒, doppler, 频移, 频偏, shift, 估计, estimat+, 信道, channel, 响应, response, 噪声, noise, 干扰, interference, 协方差, covariance, 矩阵, matrix, 空域, spatial, 合并, combine, 等效, equivalent, 资源块, RB, 端口, port

**C.    DOCUMENTS CONSIDERED TO BE RELEVANT**

| Category* | Citation of document, with indication, where appropriate, of the relevant passages | Relevant to claim No. |
|---|---|---|
| A | CN 101917363 A (SHANGHAI HUAWEI TECHNOLOGIES CO., LTD.) 15 December 2010 (2010-12-15)<br>claim 1 | 1-14 |
| A | CN 105099610 A (HUAWEI TECHNOLOGIES CO., LTD.) 25 November 2015 (2015-11-25)<br>entire document | 1-14 |
| A | US 2016337105 A1 (INTERDIGITAL TECHNOLOGY CORPORATION) 17 November 2016 (2016-11-17)<br>entire document | 1-14 |
| A | US 2016227462 A1 (TELEFONAKTIEBOLAGET L M ERICSSON PUBL) 04 August 2016 (2016-08-04)<br>entire document | 1-14 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 December 2019** | **01 February 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2019/115779** |

**C.     DOCUMENTS CONSIDERED TO BE RELEVANT**

| Category* | Citation of document, with indication, where appropriate, of the relevant passages | Relevant to claim No. |
| --- | --- | --- |
| A | 但德东 等 (DAN, Dedong et al.). "超高速OFDM通信系统实时频偏估计研究 (Research on Real-time Frequency Offset Estimation in Ultra High-velocity OFDM Communication System)" 合肥工业大学学报(自然科学版) (*Journal of Hefei University of Technology （Natural Science)*), Vol. 38, No. 2, 28 February 2015 (2015-02-28), ISSN: 1003-5060,<br>    entire document | 1-14 |

Form PCT/ISA/210 (second sheet) (January 2015)

**INTERNATIONAL SEARCH REPORT**
**Information on patent family members**

International application No.

**PCT/CN2019/115779**

| Patent document cited in search report | | | Publication date (day/month/year) | Patent family member(s) | | | Publication date (day/month/year) |
|---|---|---|---|---|---|---|---|
| CN | 101917363 | A | 15 December 2010 | None | | | |
| CN | 105099610 | A | 25 November 2015 | None | | | |
| US | 2016337105 | A1 | 17 November 2016 | None | | | |
| US | 2016227462 | A1 | 04 August 2016 | CN | 107258104 | A | 17 October 2017 |
| | | | | EP | 3251416 | A1 | 06 December 2017 |
| | | | | WO | 2016120430 | A1 | 04 August 2016 |

Form PCT/ISA/210 (patent family annex) (January 2015)